# EUROPÄISCHE PATENTSCHRIFT

(11) **EP 1 268 868 B1**
(45) Veröffentlichungstag und Bekanntmachung des Hinweises auf die Patenterteilung: **28.07.2004**
(21) Anmeldenummer: 01273098.2
(22) Anmeldetag: 19.12.2001
(51) Int. Cl.: C22C 1/00

(54) **PULVERMETALLURGISCHES VERFAHREN ZUR HERSTELLUNG HOCHDICHTER FORMTEILE**
POWDER METALLURGICAL METHOD FOR PRODUCING HIGH-DENSITY SHAPED PARTS
PROCEDE DE METALLURGIE DES POUDRES EN VUE DE LA PRODUCTION DE PIECES FACONNEES DE HAUTE DENSITE

(30) Priorität: 15.01.2001 AT 312001
(43) Veröffentlichungstag der Anmeldung: 02.01.2003
(73) Patentinhaber: PLANSEE Aktiengesellschaft, 6600 Reutte, Tirol (AT)
(72) Erfinder: JANOUSEK, Martin, A-6600 Reutte / Tirol (AT); KRAUSSLER, Wolfgang, A-6671 Weissenbach/Tirol (AT); ZOBL, Gebhard, A-6677 Schattwald/Tirol (AT); ZACH, Reinhold, A-6600 Reutte/Tirol (AT); GLATZ, Wolfgang, 6600 Reutte/Tirol (AT)
(74) Vertreter: Lohnert, Wolfgang, Dr.
(86) Internationale Anmeldenummer: PCT/AT2001/000398
(87) Internationale Veröffentlichungsnummer: WO 2002/055747

(56) Entgegenhaltungen:
- DE-C- 19 643 156
- US-A- 5 989 491

## Beschreibung

Die Erfindung betrifft ein pulvermetallurgisches Verfahren zur Herstellung hochdichter Formteile aus einer Legierung, die neben einem Anteil von mindestens
20 Gew.% Chrom, aus Eisen, sowie weiters aus einem oder mehreren zusätzlichen metallischen und/oder keramischen Legierungsanteilen, die in Summe nicht mehr als 10 Gew.% betragen, besteht.

Reines Chrom und Legierungen mit hohen Chromanteilen sind bei niederen Temperaturen äußerst spröde und daher nur sehr schwer mit üblichen pulvermetallurgischen Hersteltungsverfahren durch Pressen und Sintern der Ausgangspulver zu verarbeiten.
Aus derartigen Werkstoffen werden daher in der Regel nur Produkte bzw. Halbzeug mit einfacher Formgebung und geringer Dichte und Festigkeit, wie beispielsweise plattenförmige Sputter Targets durch Pressen und Sintern hergestellt, die dann falls erforderlich zur Erreichung der gewünschten Enddichte und Endfestigkeit noch thermomechanisch weiterverarbeitet werden.

Eisenpulver ist im Vergleich zu Chrompulver auch bei niedrigen Temperaturen äußerst duktil und lässt sich daher problemlos verpressen.
Chromlegierungspulver mit einem genügend hohen Eisenanteil lassen sich daher in der Regel auch einigermaßen gut verpressen. Problematisch wird es jedoch wieder dann, wenn neben dem Eisenanteil auch noch andere Legierungsanteile in kleineren Mengen im Legierungspulver vorhanden sind.

Derartige Legierungen, insbesondere solche mit einem Chromgehalt von etwa 90 bis 95 Gew.%, einem Eisenanteil von etwa 9 bis 4 Gew.% und einem Anteil von Yttrium oder anderen seltenen Erden bzw. deren Oxiden bis etwa 1 Gew.% werden aufgrund ihrer speziellen thermischen Ausdehnungskoeffizienten auch für Interkonnektoren von Festoxid-Brennstoffzellen verwendet. Um eine genügend homogene Verteilung der nur in kleinen Mengen vorhandenen Legierungsanteile an Yttrium bzw. seltenen Erden in der Pulvermischung zu erreichen, ist ein sogenanntes mechanisches Legieren der hochreinen Ausgangspulver in Hochenergiemühlen, in der Regel Attritoren, erforderlich. Derartige Legierungen werden nach dem derzeitigen Stand der Technik daher auch ausschließlich über den Weg des mechanischen Legierens hergestellt.

Die DE 196 43 156 C1 beschreibt ein solches Verfahren.
Nachteilig dabei ist, dass es durch das mechanische Legieren wiederum zu einer zusätzlichen Verfestigung und Veränderung der Morphologie der Pulver kommt, was die gute Verpressbarkeit des Pulveransatzes stark beeinträchtigt. Komplex geformte, hochdichte Formteile aus derartig mechanisch legierten Pulvem wie es beispielsweise auch Interkonnektoren von Brennstoffzellen sind, können durch Pressen und Sintern in endkontumaher Form nicht mehr hergestellt werden.
Zur Herstellung derartiger Teile müssen daher zuerst Rohteile als einfach geformte Teile mit ausreichendem Übermaß, oder als Halbzeug, durch Pressen und Sintern hergestellt werden, wobei eine maximale Dichte von etwa 70 % erreicht wird.
Zur Erzielung der notwendigen Enddichte für eine ausreichende mechanische Festigkeit müssen diese Rohteile durch mechanisches Umformen, z.B. durch Walzen, weiterverformt werden. Die gewünschten Endkonturen, was bei Interkonnektoren beispielsweise Kanäle und durch Noppen strukturierte Oberflächen sein können, müssen dann aus diesen Rohteiten mit großen Kosten und hohem Zeitaufwand mechanisch und/oder elektrochemisch herausgearbeitet werden.

Die US 5 989 491 beschreibt ein Verfahren zur Herstellung einer wärmebeständigen, pulvermetallurgischen ODS-Legierung über Atomatisieren bzw. Verdüsen und von Kompaktieren und Sintern nach verschiedenen, gängigen Verfahren. Unter den sehr unterschiedlichen Legierungen wird eine Chrom-Eisen-ODS-Legierung explizit angeführt.

Mit anderen pulvermetallurgischen Herstellungsverfahren, wie beispielsweise dem Metallspritzgießen, sind zwar auch komplex geformte Formteile in endkontumaher Form herstellbar. Nachteilig ist jedoch, dass für derartige Verfahren hohe Bindemittelanteile erforderlich sind, die eine Schrumpfung der geformten Teile während der Sinterung um bis zu 10 % und mehr bewirken, was sich wiederum nachteilig auf die Maßhaltigkeit und Konturtreue des fertigen Teiles auswirkt. Darüber hinaus ist die Technologie des Metallspritzgießens nach dem heutigen Stand der Technik nur auf kleine Teile beschränkt.

Die Aufgabe der vorliegenden Erfindung ist es daher, ein pulvermetallurgisches Verfahren zu schaffen, durch dessen Anwendung aus einer Legierung die neben einem Anteil von mindestens 20 Gew.% Chrom, aus Eisen, sowie aus einem oder mehreren zusätzlichen metallischen und/oder keramischen Legierungsanteilen mit in Summe nicht mehr als 10 Gew.% besteht, auf einfache Weise kostengünstig auch ausreichend dichte, endformnahe Formteile großer Abmessungen und komplexer Formgebung hergestellt werden können.

Erfindungsgemäß wird dies dadurch erreicht, dass die Herstellung der
Formteile durch ein endformnahes Pressen und Sintern eines Pulveransatzes erfolgt, wobei als Pulveransatz eine Mischung aus elementarem Chrompulver mit einem Vorlegierungspulver aus Eisen und den zusätzlichen Legierungsanteilen verwendet wird.

Entscheidend ist, dass die zusätzlichen metallischen und / oder keramischen Legierungsanteile ausschließlich in Form einer Vorlegierung mit Eisen in den Pulveransatz eingebracht werden, wodurch einerseits eine vorzügliche Gleichmäßigkeit der Verteilung der zusätzlichen Legierungsanteile in der Legierung erreicht und andererseits die gute Verpressbarkeit des Pulveransatzes erhalten bleibt, so dass auch große Formteile mit komplexer Formgebung gut herstellbar sind. Die Chromanteile werden dem Pulveransatz als elementare Pulver zugegeben.

Das Vorlegierungspulver wird vorteilhafterweise durch Erschmelzen zumindest eines der an der Vorlegierung beteiligten Legierungsbestandteile und anschließende Verdüsung der Schmelze hergestellt.

Der Pulveransatz ist bis auf Pressdichten von 90 % und mehr verpressbar und schwindet bei der Sinterung praktisch nicht, so dass durch das erfindungsgemäße Verfahren endformnahe Bauteile praktisch ohne größere Nacharbeit maßgenau herstellbar sind.

Der Vorteil einer Vorlegierung aus Eisen und den zusätzlichen Legierungsanteilen besteht darin, dass sich Eisen problemlos bereits bei Temperaturen von etwa 1.500°C erschmelzen lässt und so eine effiziente Herstellung des Vorlegierungspulvers ermöglicht.

Von Vorteil ist es insbesondere, wenn das Pressen der Pulvermischung mit mehrteiligen Pressstempeln erfolgt, die auf die Geometrie des Formteiles abgestimmt sind und zumindest an ihrer mit dem Pulver in Kontakt stehenden Oberfläche mit einer Verschleißschutzschicht versehen sind. Durch die Unterteilung der Pressstempel und Anpassung an die Geometrie des Formteiles können am Formteil partiell noch höhere Presskräfte aufgebracht werden und kann eine möglichst hohe Verdichtung an allen Abschnitten des Formteiles, insbesondere auch in besonders komplex geformten Abschnitten erreicht werden. Die Hartstoffbeschichtung verhindert selbst bei höchsten Pressdrücken einen zu raschen Verschleiß des Presswerkzeuges durch den Pulveransatz.

Insbesondere ist das erfindungsgemäße Verfahren auch für die Herstellung eines Interkonnektors einer Brennstoffzelle anwendbar.

Besonders geeignete Legierungen für derartige Interkonnektoren sind beispielsweise Legierungen, die aus einem Pulveransatz mit 20 bis 30 Gew.% Chrom sowie 70 bis 80 Gew.% einer Vorlegierung aus Eisen mit 0,5 bis 0,8 Gew.% Seltenerdmetallen, insbesondere Yttrium, oder aus einem Pulveransatz aus 95 Gew.% Chrom und 5 Gew.% einer Vorlegierung aus Eisen mit 0,5 bis 0,8 Gew.% Yttrium gefertigt werden.
Wichtig bei Interkonnektoren ist, dass, abgesehen von der notwendigen, genauen Ausgestaltung der komplexen Formgebung, auch die notwendige Dichte des Materials erreicht wird, welche die für Interkonnektoren geforderte Gasdichtheit gewährleistet.
Diese Gasdichte wird vielfach schon allein durch die Anwendung des erfindungsgemäßen Verfahrens erreicht.

Sollte die Gasdichte bei bestimmten Legierungen nicht ausreichend sein ist es von Vorteil, auf die Oberflächen des gepressten und gesinterten
Interkonnektors entweder eine Chromschicht galvanisch aufzubringen oder die Oberflächen durch Auflegen einer Graphitplatte und eine anschließende Wärmebehandlung bei einer Temperatur zwischen 1.100°C und 1.300°C während 12 bis 48 Stunden zu Karburieren. Durch die Anwendung dieser zusätzlichen Verfahrensschritte wird dann mit 100%iger Sicherheit eine ausreichende Gasdichte der Interkonnektoren erreicht.

Im folgenden wird die Erfindung an Hand eines Herstellungsbeispieles näher erläutert.

### Herstellungsbeispiel

Zur Herstellung von scheibenförmigen Interkonnektorenhälften mit Strömungskanälen und einer feingenoppten Oberfläche mit einem Durchmesser von 120 mm und einer Dicke von 2,5 mm wurde ein Pulveransatz aus
95 Gew.% elementarem Chrompulver und 5 Gew.% eines Vorlegierungspulvers aus Eisen mit 0,8 Gew.% Yttrium hergestellt. Die verwendeten Komfraktionen der Pulver lagen im Bereich von 45 µm bis 160 µm. Die Ansatzfertigung erfolgte durch Einwiegen der einzelnen Pulver, Zugabe von etwa 1 Gew.% Mikrowachs als Presshilfsmittel und anschließendes 15-minütiges Mischen in einem Taumelmischer.
Das Verpressen des Pulveransatzes erfolgte auf einer Matrizenpresse mit geteilten Pressstempeln, die auf die spezielle Form der Interkonnektorenhälften, mit einem Stempel für den Innenring mit ebener Oberfläche, einem Stempel für die Zentralfläche mit genoppter Oberfläche sowie einem Stempel für die Außenfläche, abgestimmt waren.
Durch die Teilung der Pressstempel konnten auch die komplex geformten Oberflächen mit einem Pressdruck von 7 t/cm² verdichtet werden.
Zur Verringerung des Stempelverschleißes durch die Aggressivität der Chrompulveranteile im Pulveransatz waren die Stempeloberflächen, die mit dem Pulver in Kontakt stehen, mit Hartstoffschichten beschichtet.
Nach dem Verpressen erfolgte der Ausstoß der Interkonnektorenhälften aus der Matrize, wobei beim Ausstoßvorgang der, im Vergleich zu Presslingen aus gut verpressbaren Pulvern wie beispielsweise Stahl, relativ geringen Grünfestigkeit der Presslinge Rechnung getragen wurde.
Die weitere Verdichtung und Verfestigung der Interkonnektorenhälften erfolgte durch eine Sinterung unter Wasserstoff bei 1.450°C während 3 Stunden. Jeweils zwei der derart hergestellten Interkonnektorenhälften konnten ohne weitere mechanische Nacharbeit durch Löten zu fertigen Interkonnektoren verbunden werden.

## Patentansprüche

1. Pulvermetallurgisches Verfahren zur Herstellung hochdichter Formkörper aus einer Legierung, die neben einem Anteil von mindestens 20 Gew.% Chrom, aus Eisen, sowie weiters aus einem oder mehreren zusätzlichen metallischen und/oder keramischen Legierungsanteilen, die in Summe nicht mehr als 10 Gew.% betragen, besteht,
**dadurch gekennzeichnet,**
**dass** die Herstellung durch ein endformnahes Pressen und Sintern eines Pulveransatzes erfolgt, wobei als Pulveransatz eine Mischung aus elementarem Chrompulver mit einem Voriegierungspulver aus Eisen und den zusätzlichen Legierungsanteilen verwendet wird.

2. Pulvermetallurgisches Verfahren nach Anspruch 1, **dadurch gekennzeichnet, dass** das Pressen der Pulvermischung mit mehrteiligen Pressstempeln erfolgt, die auf die Geometrie des herzustellenden Formteiles abgestimmt sind und zumindest an ihrer mit dem Pulver in Kontakt stehenden Oberfläche mit einer Verschleißschutzschicht versehen sind.

3. Pulvermetallurgisches Verfahren nach einem der Ansprüche 1 bis 2,
**dadurch gekennzeichnet, dass** das Formteil der Interkonnektor einer Brennstoffzelle ist.

4. Pulvermetallurgisches Verfahren nach einem der Ansprüche 1 bis 3,
**dadurch gekennzeichnet, dass** der Pulveransatz aus 95 Gew.% Chrom und 5 Gew.% einer Vorlegierung aus Eisen mit 0,5 bis 0,8 Gew.% Yttrium besteht.

5. Pulvermetallurgisches Verfahren nach einem der Ansprüche 1 bis 3,
**dadurch gekennzeichnet, dass** der Pulveransatz aus 20 bis 30 Gew.% Chrom und 70 bis 80 Gew.% einer Vorlegierung aus Eisen mit 0,5 bis 0,8 Gew.% Seltenerdmetallen, insbesondere Yttrium besteht.

6. Pulvermetallurgisches Verfahren nach Anspruch 3, **dadurch gekennzeichnet, dass** auf die Oberflächen des gepressten und gesinterten Interkonnektors eine Chromschicht galvanisch aufgebracht wird.

7. Pulvermetallurgisches Verfahren nach Anspruch 3, **dadurch gekennzeichnet, dass** die Oberflächen des gepressten und gesinterten Interkonnektors durch Auflegen einer Graphitplatte und eine anschließende Wärmebehandlung bei einer Temperatur zwischen 1.100°C und 1.300°C während 12 bis 48 Stunden karburiert wird.

## Claims

1. Powder metallurgical process for the production of high-density moulded bodies from an alloy which, in addition to comprising at least 20 wt.% chromium, comprises iron as well as one or more additional metallic and/or ceramics alloying constituents which, in total, account for not more than 10 wt.%,
**characterised in that**
the production is carried out by compressing and
sintering a powder batch into a form close to the finished form, there being used as the powder batch a mixture of elemental chromium powder with a master alloy powder comprising iron and the additional alloying constituents.

2. Powder metallurgical process according to claim 1,
**characterised in that** the powder mixture is compressed using multi-part press dies which are matched to the geometry of the moulding that is to be produced and are provided with an anti-wear coating at least on their surface in contact with the powder.

3. Powder metallurgical process according to either claim 1 or claim 2, **characterised in that** the moulding is the interconnector of a fuel cell.

4. Powder metallurgical process according to any one of claims 1 to 3, **characterised in that** the powder batch comprises 95 wt.% chromium and 5 wt.% of a master alloy of iron with from 0.5 to 0.8 wt.% yttrium.

5. Powder metallurgical process according to any one of claims 1 to 3, **characterised in that** the powder batch comprises from 20 to 30 wt.% chromium and from 70 to 80 wt.% of a master alloy of iron with from 0.5 to 0.8 wt.% rare earth metals, especially yttrium.

6. Powder metallurgical process according to claim 3,
**characterised in that** a chromium coating is applied by electroplating to the surfaces of the compressed and sintered interconnector.

7. Powder metallurgical process according to claim 3,
**characterised in that** the surfaces of the compressed and sintered interconnector are carburised by the application of a graphite plate and subsequent heat treatment at a temperature of from 1100°C to 1300°C for from 12 to 48 hours.

## Revendications

1. Procédé de fabrication, par métallurgie des poudres, de pièces façonnées de haute densité en un alliage qui se compose, en plus d'une teneur en chrome d'au moins 20% en poids, de teneurs en fer et en un ou plusieurs alliages métalliques et/ou céramiques additionnels qui ne dépassent pas 10% en poids au total,
**caractérisé en ce que**
la fabrication s'effectue par un compactage et un frittage d'une ébauche de poudre jusqu'à une forme voisine de la forme finale, l'ébauche de poudre consistant en un mélange de poudre élémentaire de chrome et de poudre d'un pré-alliage constitué des teneurs en fer et alliages additionnels.

2. Un procédé de métallurgie des poudres selon la revendication 1, **caractérisé en ce que** le compactage du mélange de poudres s'effectue au moyen de poinçons en multiples éléments qui sont adaptés à la géométrie de la pièce façonnée à fabriquer et comportent, au moins à leur surface en contact avec la poudre, une couche de protection contre l'usure.

3. Procédé de métallurgie des poudres selon la revendication 1 ou 2, **caractérisé en ce que** la pièce façonnée est la pièce intercalaire de chambre de combustion d'une pile à combustible.

4. Procédé de métallurgie des poudres selon l'une quelconque des revendications précédentes, **caractérisé en ce que** l'ébauche de poudre se compose de 95% en poids de chrome et de 5% en poids d'un pré-alliage de fer à 0,5 à 0,8 % en poids d'yttrium.

5. Procédé de métallurgie des poudres selon l'une quelconque des revendications 1 à 3, **caractérisé en ce que** l'ébauche de poudre se compose de 20 à 30% en poids de chrome et de 70 à 80% en poids d'un pré-alliage de fer à 0,5 à 0,8% en poids de métaux des terres rares, en particulier d'yttrium.

6. Procédé de métallurgie des poudres selon la revendication 3, **caractérisé en ce qu'**une couche de chrome est déposée par effet galvanique sur les surfaces de la pièce intercalaire comprimée et frittée.

7. Procédé de métallurgie des poudres selon la revendication 3, **caractérisé en ce que** les surfaces de la pièce intercalaire compactée et frittée est carburée par dépôt d'une plaque de graphite et traitement thermique ultérieur à une température comprise entre 1100°C et 1300°C pendant 12 à 48 heures.
